# EUROPEAN PATENT SPECIFICATION

(11) **EP 2 623 834 B1**
(45) Date of publication and mention of the grant of the patent: **15.05.2019**
(21) Application number: 12153610.6
(22) Date of filing: 02.02.2012
(51) Int. Cl.: F16L 27/093, F16L 41/00

(54) **Connector of hydraulic and/or pneumatic circuit, in particular for industrial vehicles**
Verbinder für einen Hydraulik- und/oder Druckluftkreislauf, insbesondere für Industriefahrzeuge
Connecteur de circuit hydraulique et/ou pneumatique, en particulier pour des véhicules industriels

(43) Date of publication of application: 07.08.2013
(73) Proprietor: Iveco Magirus AG, 89079 Ulm (DE)
(72) Inventor: LEOKA, Georg, 89075 ULM (DE)
(74) Representative: Franzolin, Luigi

(56) References cited:
- WO-A1-00/15966
- DE-A1- 19 920 310
- US-A- 2 327 449
- US-A- 2 953 118

## Description

### Application field of the invention

The present invention refers to the field of connectors of hydraulic and/or pneumatic circuits, in particular for industrial vehicles.

### Description of the prior art

Industrial vehicles are equipped with braking systems and with suspension control systems of pneumatic and/or hydraulic type. Their respective hydraulic and/or pneumatic circuits are formed by valves and junction boxes of the different portions of the circuits.

The number of interconnections and the need for limiting the bulk are issues in contrast with each other.

Connectors known in the art are tubular-shaped with two opposite ends and a ring nut in the middle. The first end is externally threaded, in order to be screwed on a pierced support element, while the second end has a spout intended to be inserted in a duct. The ring nut is generally placed at the base of the spout, in order to be engaged by an open end, a box end or a socket operating wrench, for fixing the connector to its respective support.

The connectors are often placed side by side, especially in the vehicular field, in a very limited space.

In addition, since it is not easy to reach such connectors, in some cases it is necessary to provide ad hoc tools for mounting the connectors that are placed in specific positions.

Another not less important problem is that in the assembly line it is necessary to mount such connectors in a very small space and in a very short time, thus the operation itself of engaging the tool on the connector is difficult. US2327449 shows a connector having an end shaped in order to be complementary with a hex wrench. The features of US2327449 are in the preamble of claim 1.

### Summary of the invention

The aim of the present invention is to overcome all the drawbacks set forth above and to provide a threaded connector which simplifies the mounting procedure of the connector itself to a respective pierced support element.

The object of the present invention is a connector of an hydraulic and/or pneumatic circuit, in particular for industrial vehicles, according to claim 1.

The connector according to the present invention can comprise a connection lug between the connector and a duct, in order to ensure that the connection angle between connector and duct is higher than zero.

Hydraulic and/or pneumatic circuits and the respective industrial vehicles comprising an aforementioned connector

### Brief description of the Figures

Further purposes and advantages of the present invention will become clear from the following detailed description of a preferred embodiment (and its alternative embodiments) and the drawings that are attached hereto, which are merely illustrative and non-limitative, in which:
Figure 1 shows an embodiment of the connector according to the present invention;
figure 2 shows the same view as figure 1, with an Allen wrench inserted in the connector;
figure 3 shows a longitudinal section of the connector of the previous figures;
figure 4 shows a longitudinal section of an alternative embodiment of the connector that is object of the present invention;
figure 5 shows a 90° connection between the connector and a duct;
figure 6 shows a longitudinal section of the connector of figure 5;
figure 7 shows a longitudinal section of a further alternative embodiment of the connector that is object of the present invention.
In the figures the same reference numbers and letters identify the same elements or components.

### Detailed description of preferred embodiments of the invention

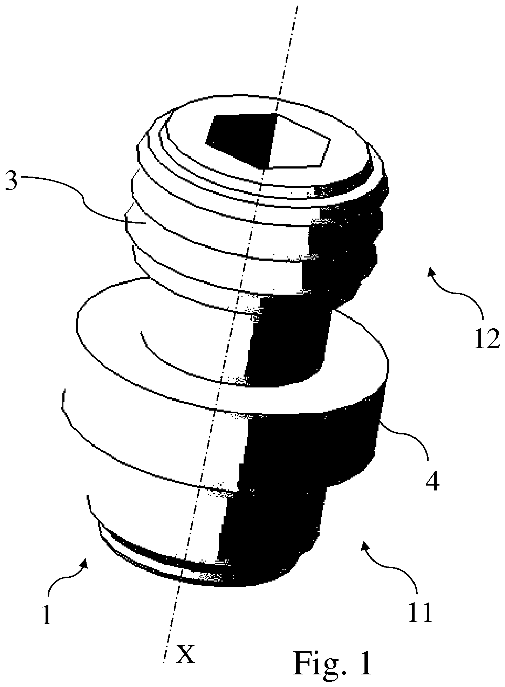

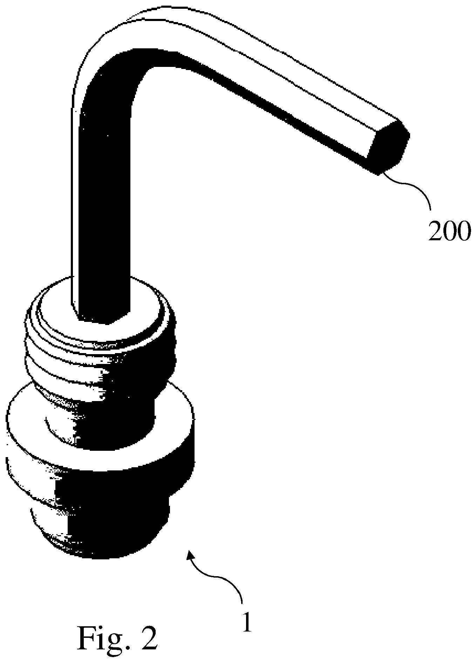

With particular reference to figures 1 - 4, 7, a connector according to the present invention is tubular-shaped and has a hollow longitudinal development according to the axis X, with a cylindrical symmetry.

According to said longitudinal development, the connector identifies two opposite ends 11 and 12, the first one being intended to be connected to a support, the second one being intended to be connected to a metal or rubber or plastic duct.

Said first end 11 may be externally threaded, or it may be provided with elements allowing a bayonet joint.

Said second end 12 comprises a coupling part that can
- be externally threaded or
- comprise peripheral circular crests 3 suitable to hold a duct having an end outlet wherein the end 12 of the connector 1 is suitable to be inserted.

According to the present invention, the elongated recess 2 of the connector, that can be reached at least from the second end 12, has a shape that is complementary to an operating wrench 200, for example an Allen or torx wrench or the like.

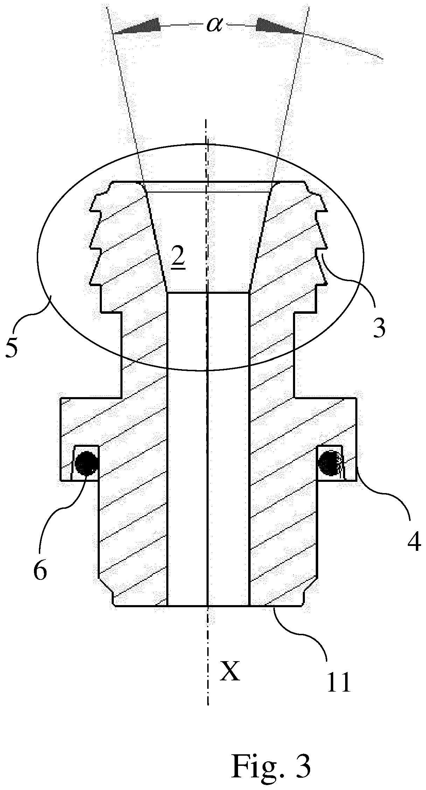

With particular reference to figure 3, the outlet of the recess 2 at the second end 12 is flared outwards.

The flare angle *α* may be variable and is preferably comprised between 2 and 15°.

The longitudinal extension of the flare may vary between 2-3 mm and a bit more than a tenth of millimeters.

It is preferable that flares with limited extension are associated to large flare angles and vice versa.

The presence of the flare, as it will become more clear in the following, facilitates the insertion of the operating wrench 200 in the connector.

With particular reference to the figures, it can be observed that in an intermediate position between the ends of the connector 1, a stop ring 4 is present to stop the connector on the support to which it is intended to be coupled.

Such annular-shaped element or ring nut is made in a single piece with the connector.

In the part facing the first end 11 of the ring 4, a specially made recess can be provided for housing an annular gasket 6 intended to be compressed between the ring 4 and the support of the connector.

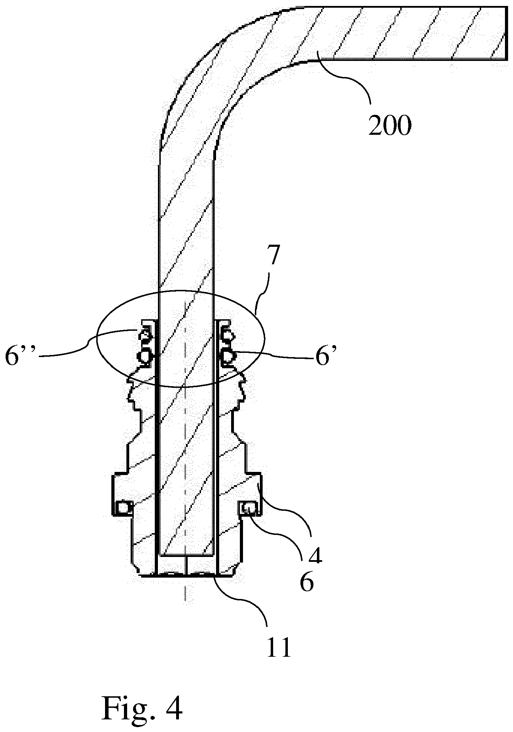

In the alternative embodiment of figure 4, the second end 12 comprises an optional portion 7 wherein at least an annular groove is present which houses a respective annular gasket 6' and/or 6".

According to the configuration shown in figure 4, starting from the bottom, the first end 11, the ring 4, the second end with the coupling part 5 and the optional part 7 are shown.

The optional part 7 is suitable to allow the engagement of a lug 20, which is suitable to define a curve, allowing a different engagement direction of the duct from said longitudinal development X. Thus the lug 20 defines an additional connection element between the connector 1 and the duct 100.

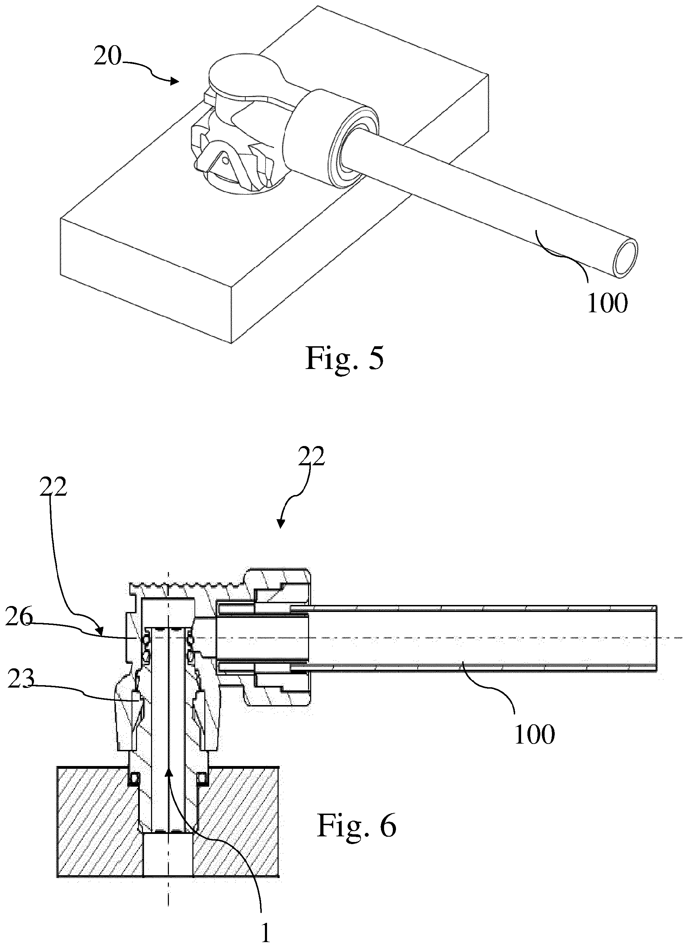

In particular, the lug represented in figures 5 and 6 is of 90° type. It is clear that the angle of the curve is related to a deviation with respect to said longitudinal axis X.

The lug comprises a first part 21 defining a cap suitable to engage the second end 12 of the connector 1, especially when it is equipped with the optional part 7.

It comprises a second part 22 suitable to be connected to a duct 100.
To that end, the engagement may indifferently be internal or external, which means that, in the first case, the duct is inserted within the lug 20; in the second case the lug is inserted within the duct 100.

With particular reference to figure 6, the section of the whole connector/lug shows the complementarity of the internal part of the lug with the second end 12 of the connector 1.
It can be noted that the part 21 of the lug comprises an internal narrowing 23 such that it cooperates with the coupling part 5 of the connector, in order to hold firmly the lug on the connector.
The optional part 7 of the connector finds a corresponding smooth wall 26 in the lug, so that the annular gaskets 6 and/or 6" can adhere to ensure the hydraulic seal between the connector 1 and the lug 20.

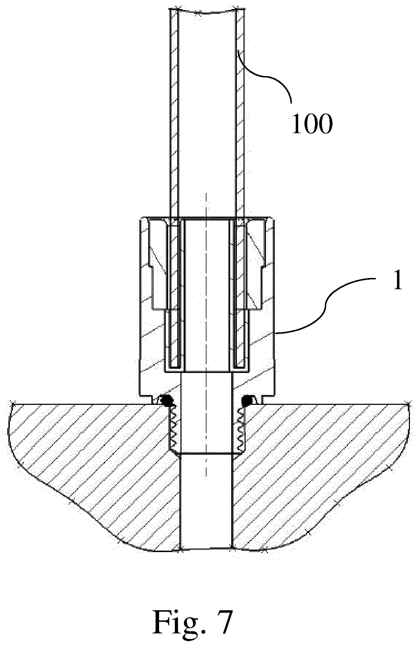

Figure 7 shows an alternative embodiment of the connector wherein the duct 100 is inserted in the connector 1 according to an internal coupling.

It is evident that, for the person skilled in the art, shaping the end of the connector for making internal/external couplings with the ducts 100 is equivalent.

According to the present invention, the internal recess of the connector is shaped in order to receive an operating wrench and thus to simplify the tightening operations of the connector where there is a very small space around the connector.

The flare of the end 12 has been shown, suitable to speed up the operations for engaging the fixed wrench in the connector. Such characteristics allows to increase the speed of the operation a lot, along the assembly lines.

An alternative embodiment of the connector has also been shown, equipped with an optional part 7 suitable to be engaged in a lug 20 which allows to vary the engagement angle of the duct 100 in the connector.

Once the connector has been tightened in the aforementioned ways, the lug may be engaged on the connector by simply applying a pressure on it.

Other alternative embodiments are possible which combine the characteristics of the alternative embodiments herein described.

Furthermore it is possible to integrate tamper-resistant systems in order to avoid the intervention of operators who are not qualified for acting on such components. Such systems are per se known in the art.

From the description set forth above it will be possible for the person skilled in the art to embody the invention with no need of describing further construction details. The elements and the characteristics described in the different preferred embodiments may be combined without departing from the scope of the present application.

## Claims

1. A connector of hydraulic and/or pneumatic circuit (1) for an industrial vehicle, said connector defining a hollow tubular shape along a longitudinal axis (X) and comprising:
- a first end (11) suitable to be connected to a support, and
- a second end (12) suitable to be connected to a duct (100),
wherein a recess (2) accessible from said second end (12) has a shape complementary with an operating wrench (200),
and wherein said second end (12) comprises a coupling part (5) that can be externally threaded or comprise peripheral circular crests (3) suitable to hold a duct (100) having an end outlet wherein the end (12) of the connector (1) is suitable to be inserted or comprises means for holding a duct (100) that can be inserted in the recess, **characterized in that** said first and second ends (11, 12) are separated by a stop ring (4) which extends outwards from said first and second ends (11,12) with respect to said axis (X), said stop ring (4) being realized in a single piece with the connector.

2. Connector according to claim 1, wherein said recess (2) is flared outwards in correspondence of said second end (12).

3. Connector according to claim 2, wherein a flare angle (α) of said flare is comprised between 2° and 15°.

4. Connector according to one of the previous claims wherein in the part facing the first end (11) of the ring (4), a recess for housing an annular gasket (6) is provided, or alternatively the second end (12) comprises a portion (7) wherein an annular groove is present which houses an annular gasket (6', 6").

5. Connector according to one of the previous claims, wherein said second end (12) comprises means for holding a duct (100) that can be inserted in the recess (2).

6. Connector according to one of the previous claims, comprising an interconnection lug (20) which comprises a first part defining a cap that engages the second end (12) of the connector (1) in a tight and stable way and a second part (22) intended to be connected to a duct (100).

7. Connector according to claim 6, further comprising further stable and tight coupling means (21,23), complementary with said stable and tight coupling means (5, 7) of the connector (1).

8. Connector according to claim 7, wherein said further stable and tight coupling means (21,23) comprise an internal narrowing (23) such that it cooperates with the coupling part (5) of the connector (1), in order to keep firmly the lug (2) on the connector and/or a smooth wall (26) suitable to adhere with said gasket (6 ,6") .

9. Hydraulic and/or pneumatic system comprising a connector (1) according to any of the claims from 1 to 5.

10. Hydraulic system according to claim 9, further comprising an interconnection lug (20) according to one of the claims from 6 to 8.

11. Industrial vehicle comprising an hydraulic system according to one of the claims 9 or 10.

## Patentansprüche

1. Verbinder für einen Hydraulik- und/oder Druckluftkreislauf (1), insbesondere für ein Industriefahrzeug, welcher Verbinder eine hohle rohrförmige Form entlang seiner Längsachse (X) begrenzt und umfasst:
- ein erstes Ende (11), geeignet, mit einem Lager verbunden zu werden, und
- ein zweites Ende (12), geeignet, um mit einer Leitung (100) verbunden zu werden,
- wobei eine Ausnehmung (2), die von dem zweiten Ende (12) aus zugänglich ist, eine Form aufweist, die komplementär mit einem Bedienungsschlüssel (200) ist,
und wobei das zweite Ende (12) einen Kupplungsteil (5) umfasst, der ein Außengewinde aufweisen kann oder ringförmige Umfangsrippen frei umfassen kann, geeignet zum Halten einer Leitung (100) mit einem Endauslass, wobei das Ende (12) der Leitung (1) geeignet ist, eingesetzt zu werden oder Mittel zum Halten einer Leitung (100) umfasst, welche in die Ausnehmung eingesetzt werden kann, **dadurch gekennzeichnet, dass** die ersten und zweiten Enden (11,12) durch einen Anschlagsring (4) getrennt sind, der sich von den ersten und zweiten Enden (11,12) bezüglich der Achse (X) nach außen erstreckt, welcher Anschlagsring (4) einstückig mit dem Verbinder ausgebildet ist.

2. Verbinder gemäß Anspruch 1, bei welchem die Ausnehmung (2) sich trichterförmig nach außen bezüglich des zweiten Endes (12) erweitert.

3. Verbinder gemäß Anspruch 2, bei welchem ein Öffnungswinkel (a) des Trichters zwischen 2° und 15° liegt.

4. Verbinder gemäß einem der vorhergehenden Ansprüche, bei welchem in dem Teil, das dem ersten Ende (11) des Rings (4) zugewandt ist, eine Ausnehmung zur Aufnahme einer ringförmigen Dichtung (6) vorgesehen ist, oder alternativ das zweite Ende (12) einen Bereich (7) aufweist, in welchem eine ringförmige Nut vorhanden ist, die eine ringförmige Dichtung (6',6") aufnimmt.

5. Verbinder gemäß einem der vorhergehenden Ansprüche, bei welchem das zweite Ende (12) Mittel zum Halten einer Leitung (100) umfasst, welche in die Ausnehmung (2) eingesetzt werden kann.

6. Verbinder gemäß einem der vorhergehenden Ansprüche, umfassend einen Verbindungsvorsprung (20), welcher einen ersten Teil umfasst, der eine Kappe definiert, die in das zweite Ende (12) des Verbinders (1) in dichter und stabiler Weise eingreift, und einen zweiten Teil (22), der zur Verbindung mit einer Leitung (100) vorgesehen ist.

7. Verbinder gemäß Anspruch 6, ferner umfassend weitere stabile und dichte Kupplungsmittel (21,23), komplementär mit den stabilen und dichten Kupplungsmitteln (5,7) des Verbinders.

8. Verbinder gemäß Anspruch 7, bei welchem die weiteren stabilen und dichten Kupplungsmittel (21,23) eine innere Verengung (23) umfassen, derart, dass diese mit dem Kupplungsteil (5) des Verbinders (1) zusammenwirkt, um die Vorsprung (2) auf dem Verbinder festzuhalten, und/oder eine glatte Wand (26), dazu geeignet, an der Dichtung (6,6") zu haften.

9. Hydraulik- und/oder Pneumatiksystem, umfassend einen Verbinder (1) gemäß einem der Ansprüche 1 bis 5.

10. Hydrauliksystem gemäß Anspruch 9, ferner umfassend einen Verbindungsvorsprung (20) gemäß einem der Ansprüche 6 bis 8.

11. Industriefahrzeug, umfassend ein Hydrauliksystem gemäß einem der Ansprüche 9 oder 10.

## Revendications

1. Raccord de circuit hydraulique et/ou pneumatique (1) pour un véhicule industriel, ledit raccord définissant une forme tubulaire creuse selon un axe longitudinal (X) et comprenant :
- une première extrémité (11) appropriée pour être raccordée à un support, et
- une seconde extrémité (12) appropriée pour être raccordée à une canalisation (100),
dans lequel un évidement (2) accessible depuis ladite seconde extrémité (12) a une forme complémentaire à une clé de fontainier (200),
et dans lequel
ladite seconde extrémité (12) comprend une partie d'accouplement (5) qui peut être filetée à l'extérieur ou comprendre des crêtes circulaires périphériques (3) appropriées pour maintenir une canalisation (100) ayant un orifice de sortie d'extrémité dans lequel l'extrémité (12) du raccord (1) est appropriée pour être insérée ou comprend un moyen de maintien d'une canalisation (100) qui peut être inséré dans l'évidement, **caractérisé en ce que** lesdites première et seconde extrémités (11, 12) sont séparées par une bague de butée (4) qui s'étend vers l'extérieur depuis lesdites première et seconde extrémités (11, 12) par rapport audit axe (X), ladite bague de butée (4) étant réalisée d'une seule pièce avec le raccord.

2. Raccord selon la revendication 1, dans lequel ledit évidement (2) est évasé vers l'extérieur en correspondance de ladite seconde extrémité (12).

3. Raccord selon la revendication 2, dans lequel un angle d'évasement (α) dudit évasement est compris entre 2° et 15°.

4. Raccord selon l'une des revendications précédentes, dans lequel, dans la partie en regard de la première extrémité (11) de la bague (4), un évidement pour loger un joint annulaire (6) est prévu, ou en variante la seconde extrémité (12) comprend une portion (7) dans laquelle une gorge annulaire est présente qui loge un joint annulaire (6', 6").

5. Raccord selon l'une des revendications précédentes, dans lequel ladite seconde extrémité (12) comprend un moyen de maintien d'une canalisation (100) qui peut être inséré dans l'évidement (2).

6. Raccord selon l'une des revendications précédentes, comprenant un ergot de liaison (20) qui comprend une première partie définissant un capuchon qui s'engage avec la seconde extrémité (12) du raccord (1) de manière serrée et stable et une seconde partie (22) destinée à être raccordée à une canalisation (100).

7. Raccord selon la revendication 6, comprenant en outre des moyens d'accouplement stable et serré supplémentaires (21, 23), complémentaires desdits moyens d'accouplement stable et serré (5, 7) du raccord (1).

8. Raccord selon la revendication 7, dans lequel lesdits moyens d'accouplement stable et serré supplémentaires (21, 23) comprennent un rétrécissement interne (23) qui est tel qu'il coopère avec la partie d'accouplement (5) du raccord (1), afin de conserver fermement l'ergot (2) sur le raccord et/ou une paroi lisse (26) appropriée pour adhérer avec ledit joint (6, 6").

9. Système hydraulique et/ou pneumatique comprenant un raccord (1) selon l'une quelconque des revendications 1 à 5.

10. Système hydraulique selon la revendication 9, comprenant en outre un ergot de liaison (20) selon l'une des revendications 6 à 8.

11. Véhicule industriel comprenant un système hydraulique selon l'une des revendications 9 ou 10.
